# EUROPEAN PATENT APPLICATION

(11) **EP 4 518 463 A1**
(43) Date of publication of application: **05.03.2025**
(21) Application number: 23795181.9
(22) Date of filing: 20.04.2023
(51) Int. Cl.: H04W 64/00

(54) **SIDELINK POSITIONING PROCESSING METHOD AND DEVICE, TERMINAL, AND READABLE STORAGE MEDIUM**

(30) Priority: 24.04.2022 CN 202210435231
(71) Applicant: Vivo Mobile Communication Co., Ltd., Dongguan, Guangdong 523863 (CN)
(72) Inventor: SI, Ye, Dongguan, Guangdong 523863 (CN); PENG, Shuyan, Dongguan, Guangdong 523863 (CN); WANG, Yuanyuan, Dongguan, Guangdong 523863 (CN); WU, Huaming, Dongguan, Guangdong 523863 (CN)
(74) Representative: Lavoix
(86) International application number: PCT/CN2023/089476
(87) International publication number: WO 2023/207748

(57) **Abstract**

This application discloses a sidelink positioning processing method and apparatus, a terminal, and a readable storage medium, pertaining to the field of communication technologies. The sidelink positioning processing method in embodiments of this application includes: sending, by a first terminal, target sidelink control information SCI, where the target SCI is used to indicate sidelink SL positioning reference signal PRS resource information, and the target SCI is SCI dedicated to an SL PRS or SCI shared with data.

## Description

### CROSS-REFERENCE TO RELATED APPLICATIONS

This application claims priority to Chinese Patent Application No. 202210435231.X, filed in China on April 24, 2022, which is incorporated herein by reference in its entirety.

### TECHNICAL FIELD

This application pertains to the field of communication technologies, and specifically, relates to a sidelink positioning processing method and apparatus, a terminal, and a readable storage medium.

### BACKGROUND

With the development of communication technologies, the positioning function has been widely used. For example, the positioning function is usually needed in services such as location tracking and ranging. At present, a target to be located is usually located by a positioning base station. In a sidelink (Sidelink, SL) communication system, a terminal may not access a network, which makes it impossible to implement the positioning function of the terminal. Therefore, the prior art has a problem of poor reliability of terminal positioning in the sidelink communication system.

### SUMMARY

Embodiments of this application provide a sidelink positioning processing method, a device, a terminal, and a readable storage medium, which can resolve the problem of poor reliability of terminal positioning in a sidelink communication system.

According to a first aspect, a sidelink positioning processing method is provided, including:
sending, by a first terminal, target sidelink control information SCI, where the target SCI is used to indicate sidelink SL positioning reference signal PRS resource information, and the target SCI is SCI dedicated to an SL PRS or SCI shared with data.

According to a second aspect, a sidelink positioning processing method is provided, including:
receiving, by a second terminal, target sidelink control information SCI from a first terminal, where the target SCI is used to indicate sidelink SL positioning reference signal PRS resource information, and the target SCI is SCI dedicated to an SL PRS or SCI for data sharing; and
performing, by the second terminal, a target operation based on the SL PRS resource information; where
the target operation includes at least one of the following:
   performing an SL resource selection;
   sending the SL PRS according to an indication of the SCI; and
   receiving an SL PRS indicated by the SCI.

According to a third aspect, a sidelink positioning processing apparatus is provided, including:
a sending module, configured to send target sidelink control information SCI, where the target SCI is used to indicate sidelink SL positioning reference signal PRS resource information, and the target SCI is SCI dedicated to an SL PRS or SCI shared with data.

According to a fourth aspect, a sidelink positioning processing apparatus is provided, including:
a receiving module, configured to receive target sidelink control information SCI from a first terminal, where the target SCI is used to indicate sidelink SL positioning reference signal PRS resource information, and the target SCI is SCI dedicated to an SL PRS or SCI for data sharing; and
an execution module, configured to perform a target operation based on the SL PRS resource information; where
the target operation includes at least one of the following:
   performing an SL resource selection;
   sending the SL PRS according to an indication of the SCI; and
   receiving an SL PRS indicated by the SCI.

According to a fifth aspect, a terminal is provided. The terminal includes a processor and a memory, where a program or instructions capable of running on the processor are stored in the memory, and when the program or the instructions are executed by the processor, the steps of the method according to the first aspect are implemented, or the steps of the method according to the second aspect are implemented.

According to a sixth aspect, a terminal is provided, including a processor and a communication interface, where the communication interface is configured to send target sidelink control information SCI, where the target SCI is used to indicate sidelink SL positioning reference signal PRS resource information, and the target SCI is SCI dedicated to an SL PRS or SCI for data sharing; or
the communication interface is configured to receive target sidelink control information SCI from a first terminal, where the target SCI is used to indicate sidelink SL positioning reference signal PRS resource information, and the target SCI is SCI dedicated to an SL PRS or SCI for data sharing; and
the processor is configured to perform a target operation based on the SL PRS resource information; where the target operation includes at least one of the following: performing an SL resource selection; sending the SL PRS according to an indication of the SCI; and receiving an SL PRS indicated by the SCI.

According to a seventh aspect, a communication system is provided, including a first terminal and a second terminal, where the first terminal may be configured to execute the steps of the sidelink positioning processing method according to the first aspect, and the second terminal may be configured to execute the steps of the sidelink positioning processing method according to the second aspect.

According to an eighth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the steps of the method according to the first aspect or implement the steps of the method according to the second aspect.

According to a tenth aspect, a computer program/program product is provided, where the computer program/program product is stored in a storage medium, and the computer program/program product is executed by at least one processor to implement the steps of the method according to the first aspect or the steps of the method according to the second aspect.

According to the embodiments of this application, the SL PRS resource information is indicated by the SCI dedicated to the SL PRS or the SCI shared with data, so that the terminal in the sidelink communication system can directly transmit the SL PRS according to the indicated SL PRS resource information to implement the sidelink positioning function, thereby improving the reliability of terminal positioning in the sidelink communication system.

### BRIEF DESCRIPTION OF DRAWINGS

FIG. 1 is a schematic structural diagram of a network to which the embodiments of this application are applicable;
FIG. 2 is a flowchart of a sidelink positioning processing method according to an embodiment of this application;
FIG. 3 is an example diagram of a resource block in a sidelink positioning processing method according to an embodiment of this application;
FIG. 4 is a flowchart of another sidelink positioning processing method according to an embodiment of this application;
FIG. 5 is a structural diagram of a sidelink positioning processing apparatus according to an embodiment of this application;
FIG. 6 is a structural diagram of another sidelink positioning processing apparatus according to an embodiment of this application;
FIG. 7 is a structural diagram of a communication device according to an embodiment of this application; and
FIG. 8 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

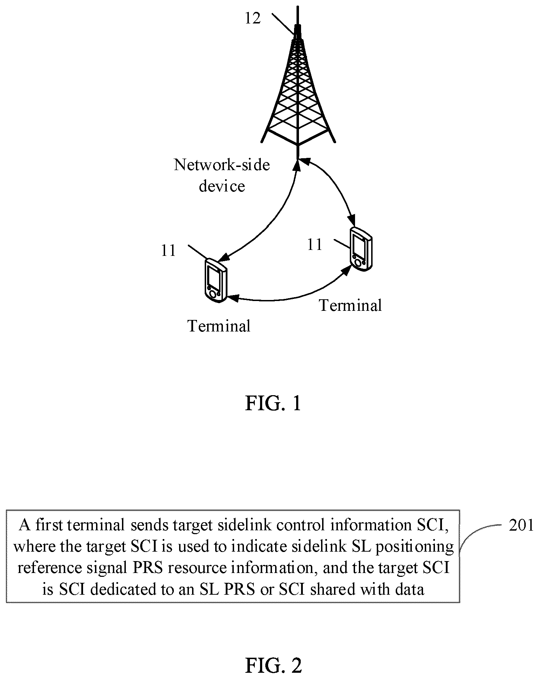

FIG. 1 is a block diagram of a wireless communication system to which the embodiments of this application are applicable. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes some content included in the embodiments of this application.

### 1. Sidelink (Sidelink, SL) transmission

The LTE system supports SL transmission, that is, terminals directly transmit data on the physical layer. LTE sidelink communication is based on broadcast, although supporting basic safety communication in vehicle to everything (vehicle to everything, V2X), not suitable for other more advanced V2X services. A fifth generation mobile communication technology (5th-Generation, 5G) new radio (New Radio, NR) system supports more advanced sidelink transmission designs, such as unicast and multicast or groupcast, so as to support more comprehensive service types.

NR sidelink includes the following channels: physical sidelink control channel (Physical Sidelink Control Channel, PSCCH), physical sidelink shared channel (Physical Sidelink Shared Channel, PSSCH), physical sidelink broadcast channel (Physical Sidelink Broadcast Channel, PSBCH) and physical sidelink feedback channel (Physical Sidelink Feedback CHannel, PSFCH).

PSSCH resource allocation is performed in a unit of subchannel, and uses a continuous resource allocation mode in frequency domain. A time-domain resource of PSCCH is the number of symbols configured by the higher layer, and a frequency domain size is a parameter configured by the higher layer, a frequency-domain resource limit of PSCCH is less than or equal to a size of one subchannel, and PSCCH is located in a range of the lowest subchannel of PSSCH.

A PSFCH channel is configured on an SL resource pool (resource pool) by a period (for example, P_PSFCH). In a resource slot (slot) k of the SL resource pool, if k mod P_PSFCH = 0, the user equipment (User Equipment, UE) considers that a PSFCH resource is present in the slot K. The PSFCH channel occupies 1 or 2 symbols (symbols), which are located at the last 2nd and 3rd symbols of the slot. A symbol (symbol) prior to PSFCH is an automatic gain control (Automatic Gain Control, AGC) symbol. A symbol name of the AGC symbol may be set according to the actual needs. The AGC symbol may be understood as repetition of the PSFCH symbol, but its function is used for AGC adjustment. A symbol behind the PSFCH is a gap (Gap).

A PSFCH resource is formed by a time-domain resource, a frequency-domain resource, and a code-domain resource. The code domain uses a ZC (Zadoff Chu) sequence, and generation of a code sequence depends on cyclic shift (cyclic shift, CS), u, and v, where u and v are a group identifier and a sequence identifier of the ZC sequence, respectively. The PSFCH resource carries 1-bit (bit) information, which is used for acknowledgement (Acknowledgement, ACK)/negative acknowledgement (Negative Acknowledgement, NACK) feedback.

There is a fixed mapping relationship between a PSFCH resource and PSCCH/PSSCH. One or more PSCCH/PSSCH occasions (occasions) can correspond to one PSFCH occasion. One PSCCH/PSSCH resource may correspond to a plurality of PSFCH resources. For transmission of the PSFCH, the UE determines a plurality of corresponding PSFCH resources based on the received PSCCH/PSSCH resources, and determines one PSFCH resource for transmission based on a terminal identifier (Identifier, ID).

### 2. NR SL resource allocation mode

NR V2X defines two resource allocation modes (mode): in mode 1, resources are scheduled by a base station; in mode 2, a terminal determines itself what resources to be used for transmission. In this case, resource information may be obtained from a broadcast message of the base station or pre-configured information. If the terminal operates within coverage of the base station and has a radio resource control (Radio Resource Control, RRC) connection to the base station, the UE may operate in mode 1 and/or mode 2; if the terminal operates within coverage of the base station but has no RRC connection to the base station, the UE can merely operate in mode 2; and if the UE is outside coverage of the base station, the UE can merely operate in mode 2 and performs V2X transmission based on pre-configured information.

In mode 2, a specific operating manner is as follows:
(1) After resource selection is triggered, a transmit terminal (TX UE) first determines a resource selection window, with a lower boundary of the resource selection window being a time of T1 after triggering of resource selection and an upper boundary for resource selection being a time of T2 after triggering, where T2 is a value selected by the terminal from a packet delay budget (packet delay budget, PDB) for its transport block (Transport Block, TB) transmission, and T2 is not earlier than T1.
(2) Before resource selection, the terminal needs to determine a candidate resource set (candidate resource set) for resource selection by comparing a reference signal received power (Reference Signal Received Power, RSRP) measured on resources in a resource selection window against a corresponding RSRP threshold (threshold) and then adding the resources into the candidate resource set if the RSRP is lower than the RSRP threshold.
(3) After the resource set is determined, the UE randomly selects a transmission resource from the candidate resource set.

In addition, the terminal may reserve a transmission resource for a next transmission during a current transmission.

NR V2X supports chained resource reservation, that is, one piece of sidelink control information (Sidelink Control Information, SCI) may be used for reserving a current resource and also for reserving a maximum of two additional resources, and two more reserved resources can be indicated on a next resource. Within the selection window, resources can be continuously reserved in a dynamic reservation manner.

The following describes in detail a sidelink positioning processing method provided in the embodiments of this application by using some embodiments and application scenarios thereof with reference to the accompanying drawings.

Referring to FIG. 2, an embodiment of this application provides a sidelink positioning processing method. As shown in FIG. 2, the sidelink positioning processing method includes the following steps.

Step 201: A first terminal sends target sidelink control information SCI, where the target SCI is used to indicate sidelink positioning reference signal (Sidelink Positioning Reference Signal, SL PRS) resource information, and the target SCI is SCI dedicated to an SL PRS or SCI shared with data.

In this embodiment of this application, the first terminal may send the target SCI to the second terminal. In some embodiments, the first terminal may be understood as a transmit end of the SL PRS, and the second terminal is a receive end of the SL PRS. In some embodiments, the first terminal can also be understood as a scheduling (scheduling) terminal, and then the second terminal may include the transmit end of the SL PRS and the receive end of the SL PRS. After receiving the target SCI, the second terminal performs a target operation based on the SL PRS resource information; where the target operation includes at least one of the following: performing an SL resource selection; sending the SL PRS according to an indication of the SCI; and receiving an SL PRS indicated by the SCI. The SL PRS is used for SL positioning measurement.

It should be noted that in the process of resource selection performed by the terminal, a selected resource includes but is not limited to at least one of an SL PRS resource, a data transmission resource, and other resources. Resource selection can alternatively include at least one process related to resource selection, such as resource reselection, re-evaluation, and resource preemption.

Optionally, the dedicated SCI may be understood as an SCI format (Format) 1-X specially used for indicating SL PRS, where X is not A. The shared SCI may be understood as an expanded SCI Format 1-A, or other shared SCI formats (Format).

Optionally, in some embodiments, the target SCI may be first-stage SCI.

According to this embodiment of this application, the SL PRS resource information is indicated by the SCI dedicated to the SL PRS or the SCI shared with data, so that the terminal in the sidelink communication system can directly transmit the SL PRS according to the indicated SL PRS resource information to implement the sidelink positioning function, thereby improving the reliability of terminal positioning in the sidelink communication system.

Optionally, the dedicated SCI includes at least one of the following indication information:
a number of a PSCCH in which SCI is located in a PSCCH resource group;
an SL resource block identifier;
a first SL PRS enabling identifier, where the first SL PRS enabling identifier is used to indicate whether an SL PRS is present in a first slot in which the dedicated SCI is located;
an SL PRS resource identifier, where the SL PRS resource identifier is used to indicate a number of a resource selected for the SL PRS by the first terminal from a resource pool or an SL PRS resource block;
SL PRS time-frequency position indication information in the first slot;
SL PRS comb (comb) structure indication information;
SL PRS comb offset (comb offset) indication information;
SL PRS cyclic shift (cyclic shift) indication information;
SL PRS sequence identifier indication information;
SL PRS time-frequency resource pattern (pattern) indication information;
first indication information, where the first indication information is used to indicate a repeated or reserved SL PRS resource in a second slot, and the second slot is different from the first slot;
SL PRS periodic indication information;
SL PRS priority indication information;
a destination address identifier (destination ID) associated with the SL PRS;
a resource identifier (source ID) associated with the SL PRS; and
a positioning measurement reporting request.

In this embodiment of this application, the indication information included in the dedicated SCI may be a value directly indicating the target parameter; or a set, range, or candidate values of target parameters specified by the protocol, configured by the network-side device, or pre-configured by the network-side device; and then is indicated by the target SCI, thereby reducing overheads.

The number of the PSCCH in which SCI is located in the PSCCH group may be understood as an identifier of the PSCCH in which the SCI is located in the SL PRS resource block, or a number of the PSCCH in which the SCI is located in a PSCCH transmission occasion in the SL PRS resource block. The network-side device (or the network side pre-configures) and/or the protocol specifies a mapping relationship between a group of PSCCHs and a group of SL PRSs, and the group of PSCCHs and the group of SL PRSs occupy a same slot. The SCI in the PSCCH is used to indicate SL PRS resources in the group of SL PRSs. The group of PSCCHs may be arranged through frequency division multiplexing (Frequency Division Multiplex, FDM), for example, in a manner of FDM and/or time division multiplexing (Time division multiplexing, TDM) at a resource block (Resource Block, RB) level. For example, a group of SL PRSs share a same frequency-domain resource block, and are distinguished/arranged through FDM (such as resource element (RE)-level FDM) and/or TDM and/or code division multiplexing (Code Division Multiplexing, CDM). In some embodiments, the network-side device (or the network side pre-configures) and/or the protocol specifies that the group of PSCCHs is arranged in a manner of FDM (such as RB-level FDM) and/or TDM, and is associated with a corresponding PSCCH number. The terminal may obtain more information, such as a time-frequency position, about the group of PSCCHs and the group of SL PRSs through the number of the PSCCH in the PSCCH group.

The foregoing SL PRS resource identifier (ID) may be understood as an SL PRS resource index (index), and in some embodiments, the SL PRS resource identifier may be replaced by an SL PRS configuration identifier. The mapping relationship between the SL PRS resource identifier and the SL PRS resource may be obtained in at least one of the following manners: being specified by the protocol, being configured (or pre-configured) by the network-side device, and being selected by the terminal.

Optionally, the SL PRS resource IDs are sorted according to an order specified by the protocol, for example, resources corresponding to the resource IDs are determined by at least one of a preset frequency domain position, a time domain position and a sequence, and a sequence of the IDs is arranged according to an order in frequency domain, time domain, and/or code domain, for example, in frequency domain first and then time domain, or in code domain first and then frequency domain and then code domain. Optionally, different SL PRS resources correspond to different frequency domain positions, which may be construed as that different SL PRS resources correspond to different comb offsets (or RE offsets) under the comb structure; different SL PRS resources correspond to different time domain positions, which may be construed as that different SL PRS resources correspond to different symbols in one slot, or different slots; and different SL PRS resources correspond to different sequences, which may be construed as that different SL PRS resources correspond to different cyclic shifts and/or sequence IDs.

Optionally, the SL PRS time-frequency position indication information includes:
frequency domain position indication information, where the frequency domain position indication information indicates at least one of a frequency domain starting position and a bandwidth; and
time domain position indication information, where the time domain position indication information indicates at least one of a starting symbol in a slot and the number of symbols in the slot.

Optionally, the frequency domain starting position may be a relative frequency domain position or a relative offset relative to a frequency domain position of the target SCI. For example, the frequency domain starting position is indicated by an offset corresponding to the target SCI and relative to the lowest frequency domain position of the PSCCH, and a unit of the offset may be PRB or subchannel (subchannel) or PSCCH bandwidth. The lowest frequency domain position may be understood as the lowest PRB or the lowest subchannel. Optionally, the relative offset is a downward offset, that is, the frequency domain starting position of the SL PRS is not higher than the lowest frequency domain position of the SCI. Optionally, if the unit of the offset is PSCCH bandwidth, the SCI may indicate that the SL PRS is deviated from the lowest frequency domain position of the PSCCH by X PSCCH bandwidths.

Optionally, the frequency domain starting position of the SL PRS may be obtained based on a PSCCH number indicated in the SCI. In an optional implementation, the network-side device (or the network side pre-configures) and/or the protocol specifies that a group of PSCCHs (the PSCCHs are arranged in an FDM (such as RB-level FDM) and/or TDM manner) has a mapping relationship with a group of SL PRSs (a group of SL PRSs share a same frequency-domain resource block and are differentiated/arranged by FDM (such as RE-level FDM) and/or TDM and/or CDM). The group of PSCCHs and the group of SL PRSs occupy a same slot. The SCI in the PSCCH is used to indicate SL PRS resources in the group of SL PRSs. The network-side device (or the network side pre-configures) and/or the protocol specifies that the group of PSCCHs is arranged in a manner of FDM (such as RB-level FDM) and/or TDM, and is associated with a corresponding PSCCH number. The lowest frequency domain position of the PSCCH with a number of 0 is the same as the lowest frequency domain position of the SL PRS. The terminal receiving the SCI can obtain the PSCCH number indicated in the SCI. The frequency domain position (or time-frequency position) of the PSCCH with a number of 0 in the PSCCH group is determined based on the PSCCH number and a current PSCCH time-frequency position. In addition, the lowest frequency domain position of the SL PRS is obtained.

Optionally, the bandwidth of the SL PRS or the granularity of bandwidth is an integer multiple of the bandwidth of the PSCCH corresponding to the SCI. Optionally, the SCI indicates that the PRS bandwidth is a multiple of that of the PSCCH.

Optionally, the frequency domain starting position is the same as the frequency domain starting position of the target SCI, that is, the offset is 0. In addition, the frequency domain starting position and the bandwidth may be represented by joint coding (such as a resource indicator value (Resource indicator value, RIV)). Optionally, the time domain position may alternatively be specified by the protocol, configured by the network-side device, or pre-configured by the network-side device. For example, the protocol specifies, the network-side device configures, or the network-side device pre-configures a relationship between the starting symbol of the SL PRS and the symbol in which the target SCI is located. For example, the starting symbol of the SL PRS is located at the 1st symbol after the PSCCH corresponding to the SCI, or located at a symbol located at the PSCCH corresponding to the SCI (such as the 1st symbol of the SCI), or has a symbol offset specified by the protocol, configured by the network-side device, or pre-configured by the network-side device and relative to the PSCCH corresponding to the target SCI.

Optionally, the starting symbol is a symbol position relative to symbol 0 or the last symbol of the slot, or a symbol position (that is, symbol offset) relative to the 1st symbol or the last symbol of the target SCI.

Optionally, the starting symbol position of the SL PRS may be obtained based on the position of the PSCCH. In some implementations, the network-side device configures (or the network-side device pre-configures) and/or the protocol specifies that a group of PSCCHs (the PSCCHs are arranged in an FDM (such as RB-level FDM) and/or TDM manner) has a mapping relationship with a group of SL PRSs (a group of SL PRSs share a same frequency-domain resource block and are differentiated/arranged by FDM (such as RE-level FDM) and/or TDM and/or CDM). The group of PSCCHs and the group of SL PRSs occupy a same slot. The SCI in the PSCCH is used to indicate PRS resources in the group of SL PRSs. The terminal obtains the PSCCH position indicated by the SCI, and obtains the time domain position of the SL PRS based on the pre-configured/specified mapping relationship. Optionally, the number of symbols may or may not include symbols occupied by an ACG and/or a GAP of the SL PRS.

Optionally, the comb structure may be specified by the protocol, configured by the network-side device, or pre-configured by the network-side device. If there are multiple comb sizes (size), the terminal may select a comb size and indicate it through the target SCI.

Optionally, the comb offset may be understood as or replaced by a resource element offset (Resource Element offset, RE offset). For example, in some embodiments, if the protocol specifies, the network-side device configures, or the network-side device pre-configures a comb size of N, then the UE selects a comb offset being one of 0 to N-1 and indicates it through the target SCI. In some embodiments, the comb offset is related to the terminal ID, and may be generated based on the terminal ID in a manner of being specified by the protocol, configured by the network-side device, or pre-configured by the network-side device. For example, in groupcast, terminals with different member (member) IDs have different comb offsets. In some embodiments, the comb offset is related to the PSCCH number, and may be generated based on the PSCCH number in a manner of being specified by the protocol, configured by the network-side device, or pre-configured by the network-side device.

Optionally, the protocol specifies, the network-side device configures, or the network-side device pre-configures a cyclic shift; and if there are X cyclic shifts, the terminal selects one of X and indicates it through the target SCI. In some embodiments, the cyclic shift is related to the PSCCH number, and the cyclic shift may be obtained based on the PSCCH number in a manner of being specified by the protocol, configured by the network-side device, or pre-configured by the network-side device.

Optionally, in some embodiments, the protocol specifies, the network-side device configures, or the network-side device pre-configures a plurality of sequences, and the terminal selects one and indicates it through the target SCI. In some embodiments, the sequence ID is related to the terminal ID, and may be equal to the terminal ID or be generated based on the terminal ID in a manner of being specified by the protocol, configured by the network-side device, or pre-configured by the network-side device. The terminal ID may be one of the following: a source ID, a destination ID, a member ID, a UE ID predefined by the protocol or pre-configured by a manufacturer, an application layer or IP layer ID, and a physical layer ID generated based on a higher-layer ID (such as a source ID, a destination ID, an application layer ID, and an IP layer ID). In some embodiments, the sequence ID is related to the PSCCH number, and the sequence ID may be obtained based on the PSCCH number in a manner of being specified by the protocol, configured by the network-side device, or pre-configured by the network-side device.

Optionally, the time-frequency resource pattern may be understood as or replaced by a relative resource element offset (relative RE offset). The protocol specifies, the network-side device configures, or the network-side device pre-configures a plurality of SL PRS patterns, and the terminal selects one and indicates it through the target SCI. The plurality of SL PRS patterns may be a plurality of SL PRS patterns with a fixed number of symbols and a comb size.

Optionally, the second slot is located in one or more slots after the first slot, for example, in some embodiments, the second slot may be a slot within a period after the first slot. The first indication information may include at least one of the following:
first sub-indication information, where the first sub-indication information is used to indicate time-frequency position information; and
second sub-indication information, where the second sub-indication information is used to indicate the number of resources.

For example, the time domain position information indicated by the first indication information may include at least one of a repeated SL PRS resource slot position and a gap between repeated SL PRS resources. The slot position may be understood as a slot offset relative to the first slot. The frequency domain position information indicated by the first indication information may include at least one of a frequency domain starting position and a bandwidth of the repeated SL PRS resource. The number of resources indicated by the second sub-indication information may represent the number of repeated SL PRS resources. Time domain positions of the plurality of SL PRS resources may be represented in a joint coding manner. The frequency domain positions of the plurality of SL PRS resources may be represented in a joint coding manner.

Optionally, the following parameters of the repeated or reserved SL PRS resources are the same, and the parameter includes at least one of comb, comb offset, cyclic shift, sequence ID, pattern, bandwidth, frequency domain starting position, time domain position in slot, period, priority, destination ID, and source ID.

Optionally, time-frequency positions of SL PRS resources in different periods are the same. The SL PRS resource includes an SL PRS of the 1st slot in each period and/or a repeated SL PRS. In some embodiments, the protocol specifies, the network-side device configures, or the network-side device pre-configures a plurality of different periods, and the terminal selects one and indicates it through the target SCI.

The priority indication information includes but is not limited to at least one of priorities of the SL PRS and other SL signals or channels, priorities of SL PRS transmission and reception, priorities of SL PRS transmission and other SL signals or channels, a priority of a positioning service, a priority of the terminal, and the like.

Optionally, the destination ID may be generated based on a layer 2 (layer-2) destination ID, and the source ID may be generated based on the layer-2 destination ID. For example, corresponding calculation may be performed based on the layer-2 destination ID to generate a destination ID and a source ID.

Optionally, the positioning measurement reporting request may be used to request the second terminal to perform measurement on the SL PRS and/or report a specific measurement quantity.

Optionally, in some embodiments, the method further includes:
obtaining, by the first terminal, SL PRS configuration information; and
determining, by the first terminal, the target SCI based on the SL PRS configuration information.

In this embodiment of the application, the SL PRS configuration information may be understood as SL PRS configuration information in a resource pool or an SL PRS resource block, that is, obtaining the SL PRS configuration information may be understood as obtaining the SL PRS configuration information in the resource pool or the SL PRS resource block. The SL PRS configuration information may be obtained in at least one of the manners: being configured by the network-side device, being pre-configured by the network-side device, being specified by the protocol, being configured by other terminals, and being pre-configured by other terminals.

Optionally, the SL PRS configuration information includes at least one of the following:
a time domain position available for SL PRS;
a frequency domain position available for SL PRS;
an SL PRS bandwidth or SL PRS bandwidth candidate set;
a comb or a comb candidate set;
the number of symbols or a candidate set of number of symbols;
a number of cyclic shifts or a candidate set of cyclic shifts;
a period or a period candidate set;
an SL PRS time-frequency resource pattern or an SL PRS time-frequency resource pattern candidate set;
a sequence identifier or a sequence identifier candidate set;
an SL PRS priority or an SL PRS priority candidate set; and
configuration information for a physical sidelink control channel PSCCH (or SCI) associated with SL PRS.

The configuration information for the PSCCH may include at least one of a PSCCH time domain position configuration and a PSCCH frequency domain position configuration, where the PSCCH time domain position configuration includes at least one of the number of PSCCH occasions in each slot, the number of symbols in each PSCCH occasion, a position of a PSCCH occasion in each slot, and a PSCCH period, and the PSCCH frequency domain position configuration includes at least one of the number of physical resource blocks PRBs occupied by one PSCCH and a PSCCH frequency domain candidate position.

For the PSCCH frequency domain candidate position, for example, using the total bandwidth of the resource pool as an example, based on a granularity of the number of PRBs occupied by the PSCCH, the PSCCH candidate position is represented by a bitmap (Bitmap). In the bitmap, 1 indicates that continuous PRBs can be used as a candidate position, and 0 indicates that continuous PRBs cannot be used as a candidate position.

Optionally, in some embodiments, the SL PRS configuration information further includes a configuration parameter for an SL PRS resource block.

In this embodiment of this application, a plurality of terminals can share a same SL PRS resource block. SL PRSs for a plurality of terminals share a same resource block, and SL PRSs sent by a plurality of terminals are distinguished by at least one of different comb offsets (or RE offset), symbol positions (optionally, different symbols belong to different slots and/or a same slot), and sequences. The SL PRS resources are allocated in a relatively regular manner.

Optionally, different SL PRS resources in the SL PRS resource block are distinguished by different symbol positions; if symbol positions of different SL PRS resources are the same, different SL PRS resources may be distinguished by different comb offsets; if the symbol positions and comb offsets of different SL PRS resources are the same, the different SL PRS resources may be distinguished by different sequences. Optionally, different sequences may be different cyclic shifts and/or different sequence IDs.

Optionally, the bandwidth of the SL PRS resource block occupies a bandwidth of the entire SL BWP bandwidth or a bandwidth of the entire SL resource pool.

Optionally, the SL PRS resource block may further be expressed as an SL PRS resource group, an SL PRS resource set, an SL PRS frequency layer, and the like.

The SL PRS resource block meets at least one of the following:
one SL PRS resource block occupies continuous PRBs in frequency domain, and one SL PRS resource block occupies at least one slot and continuous symbols in one slot in time domain; where
first features of different SL PRS resources included in a same SL PRS resource block are the same, and the first feature includes at least one of the following: an SL PRS bandwidth, a comb size, the number of symbols, and an available cyclic shift; where optionally, the first features may be configured jointly for different SL PRS resources included in the same SL PRS resource block, or separately for different SL PRS resources; and the configured first features have the same content;
different SL PRS resources included in one SL PRS resource block are distinguished by at least one of different comb offsets (or RE offset), symbol positions (optionally, different symbols belong to different slots and/or a same slot), and sequences;
in one slot, different SL PRS resources included in the SL PRS resource block are distinguished by different second features, and the second feature includes at least one of a comb offset (or RE offset), a symbol position, and a sequence;
in one slot, mapping of each SL PRS resource in the SL PRS resource block starts from the lowest PRB or the lowest subchannel of the SL resource block;
in one slot, each SL PRS resource in the SL PRS resource block occupies an entire bandwidth of the SL PRS resource block;
in one slot, one SL PRS resource in the SL PRS resource block has Z consecutive symbols, where Z is a positive integer;
in one slot, a symbol spaced between SL PRS resources in different time domain positions includes at least one of a gap (GAP) symbol and an automatic gain control AGC symbol;
in one slot, each SL PRS resource in the SL PRS resource block is associated with an SL PRS resource number or an SL PRS resource identifier (index); where optionally, the number of the SL PRS resource is a number of the SL PRS resource in the entire slot or a number of the SL PRS resource after the PSCCH occasion;
in one slot, the 1st symbol of the SL PRS resource block is used for automatic gain control AGC, and the last symbol is a GAP symbol;
in one slot, a PSCCH in the SL PRS resource block has at least one PSCCH transmission occasion (PSCCH occasion) in time domain; where one transmission occasion occupies N consecutive symbols starting from the X-th symbol (such as the second symbol), and a plurality of PSCCHs on N symbols may be frequency division multiplexed and/or time division multiplexed and/or code division multiplexed, and different PSCCHs may be used to indicate different SL PRS resources in the SL PRS resource block, and X and N are positive integers; optionally, the starting symbols of different PSCCH transmission occasions are different (the number of consecutive symbols occupied may be the same or different); optionally, the previous symbol of different PSCCH transmission occasions is used for AGC;
in one slot, a PSCCH in the m-th PSCCH transmission occasion in the SL PRS resource block is used to indicate an SL PRS resource located after the m-th PSCCH occasion and before the (m+1)-th PSCCH transmission occasion, where m is a positive integer; that is, the PSCCH in the m-th PSCCH transmission occasion does not indicate an SL PRS resource after other PSCCH transmission occasions; optionally, SL PRS resources indicated by the PSCCH in the m-th PSCCH transmission occasion are distinguished by at least one of different comb offsets (or RE offset), symbol positions, and sequences;
in one slot, one PSCCH in the SL PRS resource block occupies L consecutive symbols, where L is a positive integer; optionally, L=N or is divisible by N;
in one slot, a symbol spaced between PSCCHs in different time domain positions include at least one of a GAP symbol and an AGC symbol;
in one slot, one PSCCH in the SL PRS resource block occupies M continuous PRBs (or subchannels) in a bandwidth of the SL PRS resource block, where M is a positive integer;
in one slot, one PSCCH in the SL PRS resource block is associated with one PSSCH; and the PSCCH and the PSSCH are frequency division multiplexed, mapping of the PSSCH starts from the 1st PRB or subchannel outside the highest or lowest frequency domain position of the PSCCH, and the PSSCH and the PSCCH occupy a total of P continuous PRBs or subchannels in frequency domain, where P is a positive integer; optionally, the PSSCH is used to carry the second-stage SCI and is indicated by SCI in the PSCCH;
in one slot, mapping of a PSCCH at the lowest frequency domain position (or the PSCCH has a number of 0, or the PSCCH has the smallest number) in the SL PRS resource block starts from the lowest PRB (the lowest subchannel) of the SL resource block;
in one slot, a PSCCH in the SL PRS resource block is associated with a PSCCH number or a PSCCH identifier; optionally, the number of the PSCCH is a number of the PSCCH in the entire slot or a number of the PSCCH in the PSCCH transmission occasion associated with the PSCCH;
different SL PRS resource blocks have different third features, where the third feature includes at least one of the following: an SL PRS bandwidth, a comb size, the number of symbols, and an available cyclic shift; optionally, the third feature may be jointly configured for different SL PRS resource blocks or the third feature may be separately configured for different SL PRS resource blocks, and the configured first features have the same content;
different SL PRS resources in the SL PRS resource block in one slot have a first mapping relationship with corresponding PSCCHs; and
at least one SL PRS resource block is configured or preconfigured in one resource pool.

Optionally, the features met by the SL PRS resource block and/or the corresponding related parameters in the features may be determined in at least one of the following manners: being specified by the protocol, being configured (or pre-configured by the network-side device) by the network-side device, and being selected by the terminal.

In this embodiment of this application, the first mapping relationship may include mapping SL PRS resources differentiated by different second features to PSCCHs at different time-frequency positions, and the second feature includes at least one of a comb offset, a symbol position, and a sequence. In this case, a PSCCH corresponding to an SL PRS occupying the preset comb offset/symbol/ sequence may be mapped to a preset PSCCH time-frequency position. In other words, the PSCCH time-frequency position with the first mapping relationship with the SL PRS resource is related to the second feature of the SL PRS.

Optionally, if there are a plurality of PSCCH transmission occasions in one slot, a PSCCH in a PSCCH transmission occasion is used to indicate an SL PRS resource after this PSCCH and an SL PRS resource before a next PSCCH occasion. Then, the first mapping relationship is a mapping relationship between the PSCCH in the PSCCH transmission occasion and the SL PRS resource after this PSCCH and before the next PSCCH occasion.

In other words, a PSCCH time-frequency position (or time-frequency domain starting position) or frequency domain position (or frequency domain starting position) of a specific SL PRS resource with a first mapping relationship (or association) is related to at least one of a frequency domain position (such as comb offset), a time domain position (such as starting symbol position), and a sequence (such as cyclic shift value) of the SL PRS resource.

Optionally, in some embodiments, in one slot, the number of PSCCHs for PRS resource blocks is greater than or equal to the number of SL PRS resources in frequency division/time division/code division. In some embodiments, if the number of PSCCHs is less than the number of SL PRS resources in frequency division/time division/code division, remaining SL PRS resources for which a mapping relationship cannot be obtained are not available. That is, if the number of PSCCHs in a slot is less than the number of SL PRS resources distinguished by the second feature, an SL PRS resource for which a mapping relationship is not obtained in the slot is not available. Optionally, if there are a plurality of PSCCH transmission occasions in one slot, a PSCCH in a PSCCH transmission occasion is used to indicate an SL PRS resource after this PSCCH and an SL PRS resource before a next PSCCH occasion. Then, the number of PSCCHs in the PSCCH transmission occasion is greater than or equal to the number of SL PRS resources in frequency division/time division/code division for the SL PRS after this PSCCH occasion and before the next PSCCH occasion. In some embodiments, if the number of PSCCHs in a PSCCH transmission occasion is less than the number of SL PRS resources in frequency division/time division/code division, remaining SL PRS resources for which a mapping relationship cannot be obtained are not available.

In some embodiments, SL PRS resources are sorted by frequency domain (such as comb offset or RE offset) first, then time domain (such as different symbols), and then code domain (such as different cyclic shifts) (or in another reverse order), and PSCCHs are sorted by frequency domain (such as the PRB or subchannel level) first and then time domain (or in another reverse order). In this case, a PSCCH with a corresponding order (or a PSCCH with a corresponding number) can be found for an SL PRS resource with a specific fixed order (or number). For example, sorting is performed in an order from low to high in frequency domain, from front to back in time domain, and from small to large in code domain (or from small to large in code domain, from high to low in frequency domain, and from front to back in time domain); similarly, PSCCHs are sorted from low to high in frequency domain (such as an order of PRBs or subchannels) and from front to back in time domain.

In some embodiments, SL PRS resources may be distinguished by frequency division and/or code division, and PSCCHs may be distinguished by frequency division. SL PRS resources may be sorted by frequency domain first and then code domain (or vice versa), and PSCCHs may be sorted in an order from low to high in frequency domain first. Then, a corresponding PSCCH can be found for an SL PRS resource with a specific fixed number.

In some embodiments, SLPRS resources may be distinguished by frequency division (such as a comb offset or RE offset), and PSCCHs may be distinguished by frequency division (such as the PRB or subchannel level). SL PRS resources may be sorted by frequency domain, and PSCCHs may be sorted in an order from low to high in frequency domain. Then, a corresponding PSCCH can be found for an SL PRS resource with a specific fixed number. For example, for an SL PRS with a RE offset of 0, a frequency domain (PRB or subchannel) starting position of a corresponding PSCCH is the lowest frequency domain position of an SL PRS resource block. An SL PRS with a RE offset of 1 corresponds to a PSCCH with a frequency domain (PRB or subchannel) starting position being the lowest frequency domain position of the SL PRS resource block + 1 PSCCH bandwidth. An SL PRS with a RE offset of n corresponds to a PSCCH with a frequency domain (PRB or subchannel) starting position being the lowest frequency domain position of the SL PRS resource block + n*PSCCH bandwidth. Optionally, if one PSCCH is also associated with one PSSCH, the SL PRS with the RE offset of n corresponds to a PSCCH with a frequency domain (PRB or subchannel) starting position being the lowest frequency domain position of the SL PRS resource block + n*(PSCCH+PSSCH bandwidth).

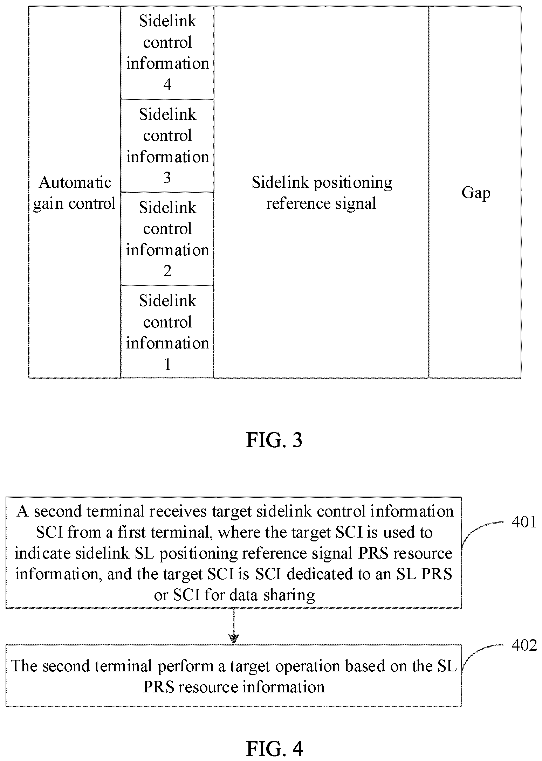

In this embodiment of this application, the pattern of the SL PRS block (SL PRS block) in one slot is shown in FIG. 3. In FIG. 3, a resource for transmitting AGC, a resource for transmitting SCI (that is, PSCCH resources), a resource for transmitting SL PRS, and a resource corresponding to GAP may be included. The resource for transmitting SCI can transmit a plurality of target SCIs. As shown in FIG. 3, a plurality of target SCIs include SCI 1, SCI 2, SCI 3, and SCI 4, and SCI 1, SCI 2, SCI 3, and SCI 4 are for multiplexed transmission. The resource for transmitting the SL PRS may be shared by a plurality of terminals.

Optionally, mapping for the SL PRS starts from a predefined/preconfigured lowest subchannel/lowest PRB.

Optionally, a resource/resource starting position/resource ending position of the SCI is determined based on an SL PRS RE offset.

Optionally, the subchannel number of the SL PRS is equal to the SL PRS RE offset.

Optionally, the configuration parameter for the SL PRS resource block includes at least one of the following:
an SL PRS resource block identifier;
a time domain position of the SL PRS resource block;
a frequency domain position of the SL PRS resource block;
the number of symbols that one terminal is able to occupy in a slot;
a symbol position occupied by the SL PRS in a slot;
a comb structure size;
cyclic shift information; and
PSCCH configuration information.

The time domain position of the SL PRS resource block may include at least one of an available symbol position, an available slot position, and a period within a slot. The frequency domain position of the SL PRS resource block can include: a frequency domain starting position (starting subchannel or starting PRB) and a bandwidth. Optionally, frequency domain positions of the SL PRS resource block in different slots may be the same or different.

The comb structure size may be replaced by a comb offset position available to the terminal or a resource element offset position.

The cyclic shift information may include an available cyclic shift value and the number of available cyclic shifts.

The configuration information of the PSCCH may include at least one of the following: a symbol position occupied by the PSCCH in one slot (such as a starting position or an ending position), the number of symbols occupied by the PSCCH in one slot, a bandwidth occupied by the PSCCH (such as the number of PRBs or subchannels occupied), the number of symbols occupied by one PSCCH, the number of PSCCHs, a symbol position occupied by each PSCCH occasion in one slot, the number of symbols occupied by each PSCCH occasion in one slot, the number of PSCCH occasions in one slot, and a frequency domain position that can be used for PSCCH transmission on a symbol in which the PSCCH is located.

Optionally, the frequency domain position used for PSCCH transmission on the symbol in which the PSCCH is located can be used to transmit a plurality of PSCCHs, where different PSCCHs may be distributed continuously or discontinuously in frequency domain (for example, being distributed discontinuously and uniformly). Optionally, the frequency domain position used for PSCCH transmission may be represented by a bitmap. A bandwidth represented by all bitmap lengths is the same as the bandwidth of the SL PRS resource block. 1 bit in the bitmap indicates whether a PRB or subchannel with a length N can be used for PSCCH transmission (optionally, N is specified by the protocol or pre-configured/configured by the network). A bit being 1 means yes, and 0 means no. The length of the bitmap is the bandwidth of the SL PRS resource block/the length indicated by 1 bit in the bitmap. Optionally, a frequency domain position with a bit being 0 in the bitmap may be used for PSSCH transmission and be used to carry the second-stage SCI.

Optionally, the symbol position occupied by the PSCCH in one slot may be represented by a bitmap, where the length of the bitmap is the number of symbols of the SL PRS resource block or the slot, and a bit being 1 indicates a symbol occupied by the PSCCH or a starting symbol.

Optionally, the symbol position occupied by each PSCCH occasion in one slot may be represented by a bitmap, where the length of the bitmap is the number of symbols of the SL PRS resource block, and a bit being 1 indicates a symbol occupied by the PSCCH or a starting symbol that is occupied by the PSCCH in symbol positions occupied by each PSCCH occasion.

Optionally, in some embodiments, information indicated by the target SCI includes second indication information of second-stage SCI in two-stage SCI, and the second-stage SCI is used to jointly indicate the SL PRS resource information along with the target SCI.

Optionally, in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI; for example, at least one of the following may be indicated: a starting PRB (or subchannel) position and the number of PRBs (or subchannels);
a symbol occupied by the PSSCH carrying the second-stage SCI; which may, for example, indicate at least one of the following: a starting symbol position and the number of symbols;
a demodulation reference signal (Demodulation Reference Signal, DMRS) pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, where the second SL PRS enabling identifier is used to indicate whether an SL PRS is present in a third slot in which the second-stage SCI is located; and
an SL PRS resource block identifier.

The indication of the DMRS pattern may include at least one of the following: the number of DMRS symbols, a DMRS symbol position, a DMRS comb structure, and a DMRS RE position. Further, a plurality of DMRS patterns may be specified by the protocol, configured by the network-side device, or pre-configured by the network-side device, and one is indicated by the target SCI.

Optionally, in some embodiments, in a case that the target SCI is dedicated SCI, the second-stage SCI includes at least one of the following:
a second SL PRS enabling identifier, where the second SL PRS enabling identifier is used to indicate whether an SL PRS is present in a slot in which the second-stage SCI is located;
an SL PRS resource identifier, where the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

It should be noted that in this embodiment of this application, because the resource information of the SL PRS is jointly indicated by the first-stage SCI and the second-stage SCI, the following parameters may be flexibly allocated in the first-stage SCI and the second-stage SCI: SL PRS time domain position indication information in the first slot in which the target SCI is located, SL PRS comb structure indication information, SL PRS comb offset indication information, SL PRS cyclic shift indication information, SL PRS sequence identifier indication information, SL PRS time-domain resource pattern indication information, first indication information, SL PRS periodic indication information, SL PRS priority indication information, a destination address identifier associated with the SL PRS, and a resource identifier associated with the SL PRS. For example, the first-stage SCI includes part of the foregoing parameters, and the second-stage SCI may include the rest of the foregoing parameters.

Optionally, in some embodiments, in a case that the target SCI is dedicated SCI, a PSSCH carrying the second-stage SCI includes at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
the number of ports of a DMRS corresponding to the PSSCH is 1;
the number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

Optionally, the features met by the PSSCH and/or the corresponding related parameters in the features may be determined in at least one of the following manners: being specified by the protocol, being configured (or pre-configured by the network-side device) by the network-side device, and being selected by the terminal.

Optionally, in a case that the target SCI is shared SCI, the format of the second-stage SCI is a format for transmitting an SL PRS configuration parameter and performing data transmission.

Optionally, in a case that the target SCI is shared SCI, the second-stage SCI includes fourth indication information associated with the SL PRS, and the fourth indication information includes at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, where the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; where
the fourth slot includes at least one of a slot in which the shared SCI is located and a reserved slot.

It should be understood that, in addition to the second indication information, the second-stage SCI may further include information in an existing second-stage SCI, and the information in the existing second-stage SCI may include at least one of the following: hybrid automatic repeat request (Hybrid Automatic Repeat Request, HARQ) process, new data indicator (New Data Indicator, NDI), redundancy version (Redundancy Version, RV), source ID, destination ID, HARQ feedback activation/deactivation, unicast, groupcast, and broadcast indication, channel state information (Channel State Information, CSI) feedback request, zone identifier (Zone ID), and communication distance requirement.

The SL PRS resource indication information may include at least one of a slot position, symbol position, bandwidth, frequency domain starting position, comb, comb offset, cyclic shift, sequence ID, pattern, and period used only for SL PRS transmission.

Optionally, in a case that the target SCI is dedicated SCI, a resource for transmitting the SL PRS and a resource for transmitting the data are located in different resource pools.

In this embodiment of this application, an independent resource pool may be set for the SL PRS. In this case, a PSCCH search space and control resource set (Coreset) may be redesigned.

Certainly, in other embodiments, in a case that the target SCI is dedicated SCI, a resource for transmitting the SL PRS and a resource for transmitting the data are located in a same resource pool, that is, a shared resource pool. In this case, the position of the PSCCH needs to meet the existing rule.

Optionally, in some embodiments, information indicated by the shared SCI includes at least one of the following:
a frequency-domain resource allocation indication;
second-stage SCI format information, where the second-stage SCI format information includes a configuration parameter for transmitting the SL PRS and a format for data transmission;
a time-domain resource allocation indication; and
fifth indication information in a reserved bit or a preset code point.

In this embodiment of this application, because bandwidths of the SL PRS and the PSSCH may be inconsistent, if there is SL PRS in the current slot, it may be indicated by the second-stage SCI.

It should be noted that the SL PRS and the PSSCH share SCI, and it is necessary to reinterpret some information indicated by the existing first-stage SCI, for example, frequency-domain resource allocation indication, format information of the second-stage SCI, and time-domain resource allocation indication. The information indicated by the existing first-stage SCI includes at least one of the following: priority of scheduled data, frequency-domain resource allocation, time-domain resource allocation, PSSCH reference signal pattern, format of second-stage SCI, code rate offset of second-stage SCI, the number of ports for PSSCH DMRS, modulation and coding scheme (Modulation and coding scheme, MCS), MCS table indication, the number of PSFCH symbols, resource reservation period, and reserved bits.

For example, in some embodiments, the frequency-domain resource allocation indication meets any one of the following:
the frequency-domain resource allocation indication is used for determining a PSSCH frequency domain position, and the frequency domain position of the PSSCH may include a bandwidth and/or starting position (the starting position may also be replaced by an ending position);
the frequency-domain resource allocation indication is used for determining an SL PRS frequency domain position, for example, the SL PRS occupies an independent slot and is not multiplexed with the PSSCH; and
the frequency-domain resource allocation indication is used for determining a PSSCH frequency domain position and an SL PRS frequency domain position.

When the frequency-domain resource allocation indication is reinterpreted as that the frequency-domain resource allocation indication is used for determining a PSSCH frequency domain position, a PSSCH bandwidth may be different from the SL PRS bandwidth.

In a case that the frequency-domain resource allocation indication is reinterpreted as that the frequency-domain resource allocation indication is used for determining a PSSCH frequency domain position and an SL PRS frequency domain position, in an embodiment, the preset code point is used for determining SL PRS enabling/disabling, If SL PRS is enabled, the current slot and/or the reserved slot has SL PRS; or if SL PRS is disabled, the current slot and/or the reserved slot have no SL PRS. For example, if the SL PRS is present, the frequency domain position of the SL PRS is predefined/preconfigured/configured. In another embodiment, the bandwidth of the SL PRS is the same as the bandwidth of the PSSCH, or a bandwidth and position are determined for the SL PRS based on a frequency resource indication value (Frequency Resource Indication Value, FRIV) of SCI format 1-A.

The second-stage SCI format includes not only the existing second-stage SCI Format-A/B/C, but also a new second-stage SCI format for transmitting SL PRS configuration parameters or for transmitting SL PRS configuration parameters and performing data transmission, where a format for transmitting SL PRS configuration parameters or for transmitting SL PRS configuration parameters and performing data transmission may be expressed as SCI format 2-D.

Optionally, a reserved slot in the time-domain resource allocation indication is used to indicate (or reinterpret) any one of the following: a slot used only for data transmission, a slot shared by data and the SL PRS, and a slot used only for SL PRS transmission.

Optionally, the fifth indication information includes at least one of the following:
a third SL PRS enabling identifier, where the third SL PRS enabling identifier is used to indicate whether an SL PRS is present in a fourth slot; and
a symbol occupied by the SL PRS, where the symbol occupied by the SL PRS is used to indicate a symbol position of the fourth slot; where
the fourth slot includes at least one of a slot in which the shared SCI is located and a reserved slot.

For the third SL PRS enabling identifier, in an embodiment, whether the SL PRS is present in the current slot and/or the reserved slot may be indicated by a bitmap, and the length of the bitmap is the number of slots of the current slot and/or the reserved slot. In another embodiment, the reserved bit (reserved bit) may indicate the presence/absence of SL PRS in the X-th slot. Based on this indication, one SCI may merely indicate whether the SL PRS is present in one slot.

Optionally, if the PRS is present in the fourth slot, the indication corresponding to the third SL PRS enabling identifier may be ignored or considered to be 0 by default.

For the symbol occupied by the SL PRS, in some embodiments, symbol positions potentially occupied by the SL PRS may be specified by the protocol, configured by the network-side device, or pre-configured by the network-side device, and the UE selects a specific symbol position in the potentially occupied symbols for SL PRS transmission and indicates it through the target SCI.

Optionally, symbols occupied by the SL PRS may or may not include a symbol occupied by AGC and/or GAP.

It should be understood that the second terminal may learn about a 2nd SCI format based on the first-stage SCI, determine a PRB occupied by the 2nd SCI format, and perform decoding normally. The second terminal may alternatively determine which symbols are occupied by data (based on symbols occupied by the SL PRS indicated by the first-stage SCI, the symbols occupied by the SL PRS can be excluded, and information about which symbols are occupied by data can be obtained) and then perform decoding normally.

As shown in FIG. 4, an embodiment of this application further provides a sidelink positioning processing method, including:

Step 401: A second terminal receives target sidelink control information SCI from a first terminal, where the target SCI is used to indicate sidelink SL positioning reference signal PRS resource information, and the target SCI is SCI dedicated to an SL PRS or SCI for data sharing.

Step 402: The second terminal perform a target operation based on the SL PRS resource information.

The target operation includes at least one of the following:
performing an SL resource selection;
sending the SL PRS according to an indication of the SCI; and
receiving an SL PRS indicated by the SCI.

Optionally, the target SCI is first-stage SCI in two-stage SCI.

Optionally, the dedicated SCI includes at least one of the following indication information:
a number of a PSCCH in which SCI is located in a PSCCH resource group;
an SL resource block identifier;
a first SL PRS enabling identifier, where the first SL PRS enabling identifier is used to indicate whether an SL PRS is present in a first slot in which the dedicated SCI is located;
an SL PRS resource identifier, where the SL PRS resource identifier is used to indicate a number of a resource selected for the SL PRS by the first terminal from a resource pool or an SL PRS resource block;
SL PRS time domain position indication information of the first slot;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, the SL PRS time domain position indication information includes:
frequency domain position indication information, where the frequency domain position indication information indicates at least one of a frequency domain starting position and a bandwidth; and
time domain position indication information, where the time domain position indication information indicates at least one of a starting symbol in a slot and the number of symbols in the slot.

Optionally, the first indication information includes at least one of the following:
first sub-indication information, where the first sub-indication information is used to indicate time-frequency position information; and
second sub-indication information, where the second sub-indication information is used to indicate the number of resources.

Optionally, information indicated by the target SCI includes second indication information of second-stage SCI in two-stage SCI, and the second-stage SCI is used to jointly indicate the SL PRS resource information along with the target SCI.

Optionally, in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI;
a symbol occupied by the PSSCH carrying the second-stage SCI;
a demodulation reference signal DMRS pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, where the second SL PRS enabling identifier is used to indicate whether an SL PRS is present in a third slot in which the second-stage SCI is located; and
an SL PRS resource block identifier.

Optionally, in a case that the target SCI is dedicated SCI, the second-stage SCI includes at least one of the following:
a second SL PRS enabling identifier, where the second SL PRS enabling identifier is used to indicate whether an SL PRS is present in a slot in which the second-stage SCI is located;
an SL PRS resource identifier, where the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, in a case that the target SCI is dedicated SCI, a PSSCH carrying the second-stage SCI includes at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
the number of ports of a DMRS corresponding to the PSSCH is 1;
the number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

Optionally, if the PSSCH and the PSCCH are frequency division multiplexed, the PSSCH that one terminal is able to occupy is continuous with a subchannel or PRB corresponding to the PSCCH, and mapping of the PSSCH starts from the 1st PRB or subchannel other than the highest or lowest frequency domain position of the PSCCH, and the PSSCH and the PSCCH occupy a total of P continuous PRBs or subchannels in frequency domain. PSSCHs and PSCCHs occupied by different terminals may also be frequency division multiplexed. For example, different terminals may occupy continuous PRBs or subchannels in frequency domain, for transmitting PSSCHs and PSCCHs occupied by the terminals.

Optionally, in a case that the target SCI is shared SCI, the format of the second-stage SCI is a format for transmitting an SL PRS configuration parameter and performing data transmission.

Optionally, in a case that the target SCI is shared SCI, the second-stage SCI includes fourth indication information associated with the SL PRS, and the fourth indication information includes at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, where the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; where
the fourth slot includes at least one of a slot in which the shared SCI is located and a reserved slot.

Optionally, in a case that the target SCI is dedicated SCI, a resource for transmitting the SL PRS and a resource for transmitting the data are located in different resource pools.

Optionally, information indicated by the shared SCI includes at least one of the following:
a frequency-domain resource allocation indication;
second-stage SCI format information, where the second-stage SCI format information includes a configuration parameter for transmitting the SL PRS and a format for data transmission;
a time-domain resource allocation indication; and
fifth indication information in a reserved bit or a preset code point.

Optionally, the frequency-domain resource allocation indication meets any one of the following:
the frequency-domain resource allocation indication is used for determining a PSSCH frequency domain position;
the frequency-domain resource allocation indication is used for determining an SL PRS frequency domain position; and
the frequency-domain resource allocation indication is used for determining a PSSCH frequency domain position and an SL PRS frequency domain position.

Optionally, a reserved slot in the time-domain resource allocation indication is used to indicate any one of the following: a slot used only for data transmission, a slot shared by data and the SL PRS, and a slot used only for SL PRS transmission.

Optionally, the fifth indication information includes at least one of the following:
a third SL PRS enabling identifier, where the third SL PRS enabling identifier is used to indicate whether an SL PRS is present in a fourth slot; and
a symbol occupied by the SL PRS, where the symbol occupied by the SL PRS is used to indicate a symbol position of the fourth slot; where
the fourth slot includes at least one of a slot in which the shared SCI is located and a reserved slot.

In the sidelink positioning processing method provided in the embodiments of this application, the execution subject may be a sidelink positioning processing apparatus. In the embodiments of this application, the sidelink positioning processing method being performed by the sidelink positioning processing apparatus is used as an example to describe the sidelink positioning processing apparatus provided in the embodiments of this application.

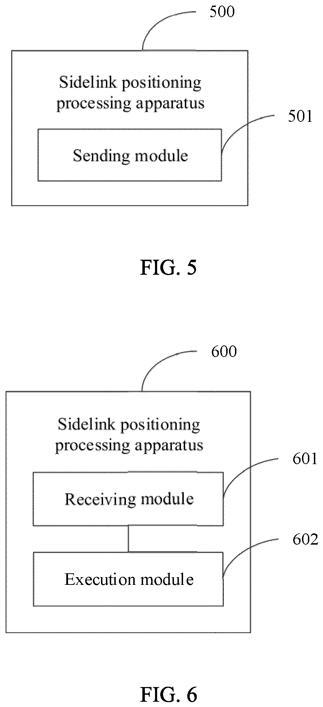

Referring to FIG. 5, an embodiment of this application further provides a sidelink positioning processing apparatus. As shown in FIG. 5, the sidelink positioning processing apparatus 500 includes:
a sending module 501, configured to send target sidelink control information SCI, where the target SCI is used to indicate sidelink SL positioning reference signal PRS resource information, and the target SCI is SCI dedicated to an SL PRS or SCI shared with data.

Optionally, the target SCI is first-stage SCI in two-stage SCI.

Optionally, the dedicated SCI includes at least one of the following indication information:
a number of a PSCCH in which SCI is located in a PSCCH resource group;
an SL resource block identifier;
a first SL PRS enabling identifier, where the first SL PRS enabling identifier is used to indicate whether an SL PRS is present in a first slot in which the dedicated SCI is located;
an SL PRS resource identifier, where the SL PRS resource identifier is used to indicate a number of a resource selected for the SL PRS by the first terminal from a resource pool or an SL PRS resource block;
SL PRS time domain position indication information of the first slot;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, the SL PRS time domain position indication information includes:
frequency domain position indication information, where the frequency domain position indication information indicates at least one of a frequency domain starting position and a bandwidth; and
time domain position indication information, where the time domain position indication information indicates at least one of a starting symbol in a slot and the number of symbols in the slot.

Optionally, the first indication information includes at least one of the following:
first sub-indication information, where the first sub-indication information is used to indicate time-frequency position information; and
second sub-indication information, where the second sub-indication information is used to indicate the number of resources.

Optionally, the sidelink positioning processing apparatus 500 further includes:
an obtaining module, configured to obtain SL PRS configuration information; and
a determining module, configured to determine the target SCI based on the SL PRS configuration information.

Optionally, the SL PRS configuration information includes at least one of the following:
a time domain position available for SL PRS;
a frequency domain position available for SL PRS;
an SL PRS bandwidth or SL PRS bandwidth candidate set;
a comb or a comb candidate set;
the number of symbols or a candidate set of number of symbols;
a number of cyclic shifts (cyclic shift) or a candidate set of cyclic shifts;
a period or a period candidate set;
an SL PRS time-frequency resource pattern or an SL PRS time-frequency resource pattern candidate set;
a sequence identifier or a sequence identifier candidate set;
an SL PRS priority or an SL PRS priority candidate set; and
configuration information for a physical sidelink control channel PSCCH associated with SL PRS.

Optionally, the configuration information for the PSCCH includes at least one of a PSCCH time domain position configuration and a PSCCH frequency domain position configuration, where the PSCCH time domain position configuration includes at least one of the number of PSCCH occasions in each slot, the number of symbols in each PSCCH occasion, a position of a PSCCH occasion in each slot, and a PSCCH period, and the PSCCH frequency domain position configuration includes at least one of the number of physical resource blocks PRBs occupied by one PSCCH and a PSCCH frequency domain candidate position.

Optionally, the SL PRS configuration information further includes a configuration parameter for an SL PRS resource block.

Optionally, the SL PRS resource block meets at least one of the following:
one SL PRS resource block occupies continuous PRBs in frequency domain, and one SL PRS resource block occupies at least one slot and continuous symbols in one slot in time domain; where
first features of different SL PRS resources included in a same SL PRS resource block are the same, and the first feature includes at least one of the following: an SL PRS bandwidth, a comb size, the number of symbols, and an available cyclic shift;
different SL PRS resources included in one SL PRS resource block are distinguished by at least one of different comb offsets, symbol positions, and sequences;
in one slot, different SL PRS resources included in the SL PRS resource block are distinguished by different second features, and the second feature includes at least one of a comb offset, a symbol position, and a sequence;
in one slot, mapping of each SL PRS resource in the SL PRS resource block starts from the lowest PRB or the lowest subchannel of the SL resource block;
in one slot, each SL PRS resource in the SL PRS resource block occupies an entire bandwidth of the SL PRS resource block;
in one slot, one SL PRS resource in the SL PRS resource block has Z consecutive symbols, where Z is a positive integer;
in one slot, a symbol spaced between SL PRS resources in different time domain positions includes at least one of a GAP symbol and an automatic gain control AGC symbol;
in one slot, each SL PRS resource in the SL PRS resource block is associated with an SL PRS resource number or an SL PRS resource identifier;
in one slot, the 1st symbol of the SL PRS resource block is used for AGC, and the last symbol is a GAP symbol;
in one slot, a PSCCH in the SL PRS resource block has at least one PSCCH transmission occasion in time domain;
in one slot, a PSCCH in the m-th PSCCH transmission occasion in the SL PRS resource block is used to indicate an SL PRS resource located after the m-th PSCCH occasion and before the (m+1)-th PSCCH transmission occasion, where m is a positive integer;
in one slot, a PSCCH in the m-th PSCCH transmission occasion in the SL PRS resource block is used to indicate an SL PRS resource located after the m-th PSCCH occasion and before the (m+1)-th PSCCH transmission occasion, where m is a positive integer;
in one slot, one PSCCH in the SL PRS resource block occupies L consecutive symbols, where L is a positive integer;
in one slot, a symbol spaced between PSCCHs in different time domain positions include at least one of a GAP symbol and an AGC symbol;
in one slot, one PSCCH in the SL PRS resource block occupies M continuous PRBs or M continuous subchannels in a bandwidth of the SL PRS resource block, where M is a positive integer;
in one slot, one PSCCH in the SL PRS resource block is associated with one PSSCH;
in one slot, mapping of a PSCCH at the lowest frequency domain position in the SL PRS resource block starts from the lowest PRB or the lowest subchannel of the SL resource block;
in one slot, a PSCCH in the SL PRS resource block is associated with a PSCCH number or a PSCCH identifier;
different SL PRS resource blocks have different third features, where the third feature includes at least one of the following: an SL PRS bandwidth, a comb size, the number of symbols, and an available cyclic shift;
different SL PRS resources in the SL PRS resource block in one slot have a first mapping relationship with corresponding PSCCHs; and
at least one SL PRS resource block is configured or preconfigured in one resource pool.

Optionally, the first mapping relationship includes mapping SL PRS resources differentiated by different second features to PSCCHs at different time-frequency positions, and the second feature includes at least one of a comb offset, a symbol position, and a sequence.

Optionally, the configuration parameter for the SL PRS resource block includes at least one of the following:
an SL PRS resource block identifier;
a time domain position of the SL PRS resource block;
a frequency domain position of the SL PRS resource block;
the number of symbols that one terminal is able to occupy in a slot;
a symbol position occupied by the SL PRS in a slot;
a comb structure size;
cyclic shift information; and
PSCCH configuration information.

Optionally, information indicated by the target SCI includes second indication information of second-stage SCI in two-stage SCI, and the second-stage SCI is used to jointly indicate the SL PRS resource information along with the target SCI.

Optionally, in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI;
a symbol occupied by the PSSCH carrying the second-stage SCI;
a demodulation reference signal DMRS pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, where the second SL PRS enabling identifier is used to indicate whether an SL PRS is present in a third slot in which the second-stage SCI is located; and
an SL PRS resource block identifier.

Optionally, in a case that the target SCI is dedicated SCI, the second-stage SCI includes at least one of the following:
a second SL PRS enabling identifier, where the second SL PRS enabling identifier is used to indicate whether an SL PRS is present in a slot in which the second-stage SCI is located;
an SL PRS resource identifier, where the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, in a case that the target SCI is dedicated SCI, a PSSCH carrying the second-stage SCI includes at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
the number of ports of a DMRS corresponding to the PSSCH is 1;
the number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

Optionally, in a case that the target SCI is shared SCI, the format of the second-stage SCI is a format for transmitting an SL PRS configuration parameter and performing data transmission.

Optionally, in a case that the target SCI is shared SCI, the second-stage SCI includes fourth indication information associated with the SL PRS, and the fourth indication information includes at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, where the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; where
the fourth slot includes at least one of a slot in which the shared SCI is located and a reserved slot.

Optionally, in a case that the target SCI is dedicated SCI, a resource for transmitting the SL PRS and a resource for transmitting the data are located in different resource pools, that is, a dedicated resource pool for SL PRS transmission.

Optionally, information indicated by the shared SCI includes at least one of the following:
a frequency-domain resource allocation indication;
second-stage SCI format information, where the second-stage SCI format information includes a configuration parameter for transmitting the SL PRS and a format for data transmission;
a time-domain resource allocation indication; and
fifth indication information in a reserved bit or a preset code point.

Optionally, the frequency-domain resource allocation indication meets any one of the following:
the frequency-domain resource allocation indication is used for determining a PSSCH frequency domain position;
the frequency-domain resource allocation indication is used for determining an SL PRS frequency domain position; and
the frequency-domain resource allocation indication is used for determining a PSSCH frequency domain position and an SL PRS frequency domain position.

Optionally, a reserved slot in the time-domain resource allocation indication is used to indicate any one of the following: a slot used only for data transmission, a slot shared by data and the SL PRS, and a slot used only for SL PRS transmission.

Optionally, the fifth indication information includes at least one of the following:
a third SL PRS enabling identifier, where the third SL PRS enabling identifier is used to indicate whether an SL PRS is present in a fourth slot; and
a symbol occupied by the SL PRS, where the symbol occupied by the SL PRS is used to indicate a symbol position of the fourth slot; where
the fourth slot includes at least one of a slot in which the shared SCI is located and a reserved slot.

Referring to FIG. 6, an embodiment of this application further provides a sidelink positioning processing apparatus. As shown in FIG. 6, the sidelink positioning processing apparatus 600 includes:
a receiving module 601, configured to receive target sidelink control information SCI from a first terminal, where the target SCI is used to indicate sidelink SL positioning reference signal PRS resource information, and the target SCI is SCI dedicated to an SL PRS or SCI for data sharing; and
an execution module 602, configured to perform a target operation based on the SL PRS resource information; where
the target operation includes at least one of the following:
   performing an SL resource selection;
   sending the SL PRS according to an indication of the SCI; and
   receiving an SL PRS indicated by the SCI.

Optionally, the target SCI is first-stage SCI in two-stage SCI.

Optionally, the dedicated SCI includes at least one of the following indication information:
a number of a PSCCH in which SCI is located in a PSCCH resource group;
an SL resource block identifier;
a first SL PRS enabling identifier, where the first SL PRS enabling identifier is used to indicate whether an SL PRS is present in a first slot in which the dedicated SCI is located;
an SL PRS resource identifier, where the SL PRS resource identifier is used to indicate a number of a resource selected for the SL PRS by the first terminal from a resource pool or an SL PRS resource block;
SL PRS time domain position indication information of the first slot;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, the SL PRS time domain position indication information includes:
frequency domain position indication information, where the frequency domain position indication information indicates at least one of a frequency domain starting position and a bandwidth; and
time domain position indication information, where the time domain position indication information indicates at least one of a starting symbol in a slot and the number of symbols in the slot.

Optionally, the first indication information includes at least one of the following:
first sub-indication information, where the first sub-indication information is used to indicate time-frequency position information; and
second sub-indication information, where the second sub-indication information is used to indicate the number of resources.

Optionally, information indicated by the target SCI includes second indication information of second-stage SCI in two-stage SCI, and the second-stage SCI is used to jointly indicate the SL PRS resource information along with the target SCI.

Optionally, in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI;
a symbol occupied by the PSSCH carrying the second-stage SCI;
a demodulation reference signal DMRS pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, where the second SL PRS enabling identifier is used to indicate whether an SL PRS is present in a third slot in which the second-stage SCI is located; and
an SL PRS resource block identifier.

Optionally, in a case that the target SCI is dedicated SCI, the second-stage SCI includes at least one of the following:
a second SL PRS enabling identifier, where the second SL PRS enabling identifier is used to indicate whether an SL PRS is present in a slot in which the second-stage SCI is located;
an SL PRS resource identifier, where the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, where the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

Optionally, in a case that the target SCI is dedicated SCI, a PSSCH carrying the second-stage SCI includes at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
the number of ports of a DMRS corresponding to the PSSCH is 1;
the number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

Optionally, in a case that the target SCI is shared SCI, the format of the second-stage SCI is a format for transmitting an SL PRS configuration parameter and performing data transmission.

Optionally, in a case that the target SCI is shared SCI, the second-stage SCI includes fourth indication information associated with the SL PRS, and the fourth indication information includes at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, where the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; where
the fourth slot includes at least one of a slot in which the shared SCI is located and a reserved slot.

Optionally, in a case that the target SCI is dedicated SCI, a resource for transmitting the SL PRS and a resource for transmitting the data are located in different resource pools.

Optionally, information indicated by the shared SCI includes at least one of the following:
a frequency-domain resource allocation indication;
second-stage SCI format information, where the second-stage SCI format information includes a configuration parameter for transmitting the SL PRS and a format for data transmission;
a time-domain resource allocation indication; and
fifth indication information in a reserved bit or a preset code point.

Optionally, the frequency-domain resource allocation indication meets any one of the following:
the frequency-domain resource allocation indication is used for determining a PSSCH frequency domain position;
the frequency-domain resource allocation indication is used for determining an SL PRS frequency domain position; and
the frequency-domain resource allocation indication is used for determining a PSSCH frequency domain position and an SL PRS frequency domain position.

Optionally, a reserved slot in the time-domain resource allocation indication is used to indicate any one of the following: a slot used only for data transmission, a slot shared by data and the SL PRS, and a slot used only for SL PRS transmission.

Optionally, the fifth indication information includes at least one of the following:
a third SL PRS enabling identifier, where the third SL PRS enabling identifier is used to indicate whether an SL PRS is present in a fourth slot; and
a symbol occupied by the SL PRS, where the symbol occupied by the SL PRS is used to indicate a symbol position of the fourth slot; where
the fourth slot includes at least one of a slot in which the shared SCI is located and a reserved slot.

The sidelink positioning processing apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The sidelink positioning processing apparatus provided in this embodiment of this application is capable of implementing the processes implemented in the method embodiments in FIG. 2 to FIG. 4, with the same technical effects achieved. To avoid repetition, details are not described herein again.

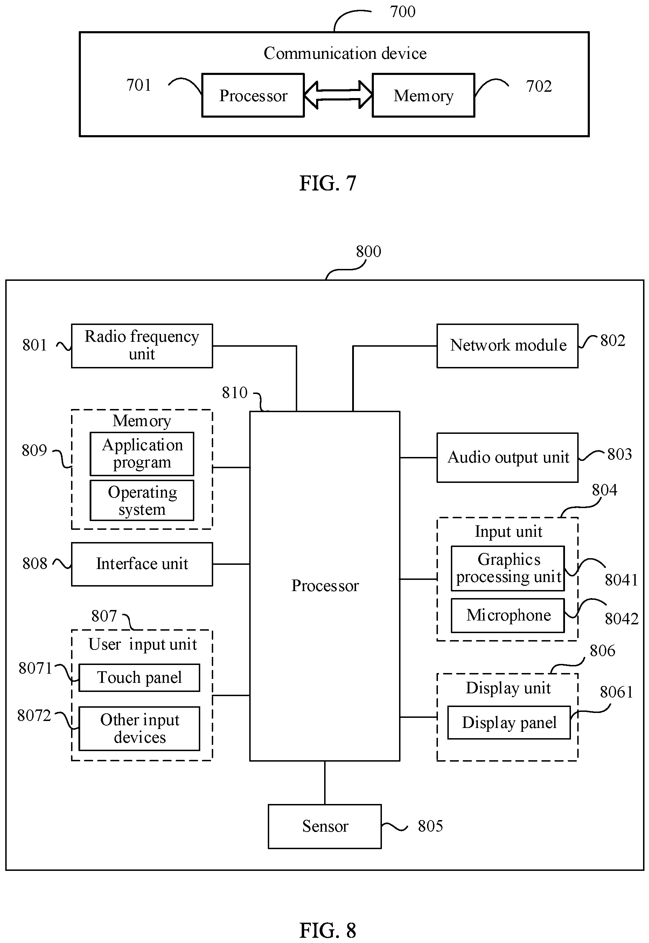

Optionally, as shown in FIG. 7, an embodiment of this application further provides a communication device 700, including a processor 701 and a memory 702, and a program or instructions capable of running on the processor 701 are stored in the memory 702. When the program or the instructions are executed by the processor 701, the processes of the foregoing sidelink positioning processing embodiments are implemented, with the same technical effects achieved. To avoid repetition, details are not described herein again.

An embodiment of this application further provides a terminal, including a processor and a communication interface, where the communication interface is configured to send target sidelink control information SCI, where the target SCI is used to indicate sidelink SL positioning reference signal PRS resource information, and the target SCI is SCI dedicated to an SL PRS or SCI shared with data; or the communication interface is configured to receive target sidelink control information SCI from a first terminal, where the target SCI is used to indicate sidelink SL positioning reference signal PRS resource information, and the target SCI is SCI dedicated to an SL PRS or SCI for data sharing; and the processor is configured to perform a target operation based on the SL PRS resource information; where the target operation includes at least one of the following: performing an SL resource selection; sending the SL PRS according to an indication of the SCI; and receiving an SL PRS indicated by the SCI. The terminal embodiments correspond to the foregoing terminal-side method embodiments, and the implementation processes and implementations of the foregoing method embodiments can be applied to the terminal embodiments, with the same technical effects achieved. Specifically, FIG. 8 is a schematic diagram of a hardware structure of a terminal for implementing the embodiments of this application.

The terminal 800 includes but is not limited to at least part of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) supplying power to the components, and the power supply may be logically connected to the processor 810 through a power management system. In this way, functions such as charge management, discharge management, and power consumption management are implemented by using the power management system. The structure of the terminal shown in FIG. 8 does not constitute any limitation on the terminal. The terminal may include more or fewer components than shown in the figure, or a combination of some components, or the components disposed differently. Details are not described herein again.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, and the like. The user input unit 807 may include at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or a power on/off key), a trackball, a mouse, a joystick, and the like. Details are not described herein.

In this embodiment of this application, the radio frequency unit 801 receives downlink data from a network-side device, and then sends the downlink data to the processor 810 for processing. In addition, the radio frequency unit 801 may sends uplink data to the network-side device. Generally, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may include a first storage area for storing a program or instructions and a second storage area for storing data. The first storage area may store an operating system, an application program or instruction required by at least one function (for example, a sound playback function or an image playback function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 809 in the embodiments of this application includes but is not limited to these and any other suitable types of memories.

The processor 810 may include one or more processing units. Optionally, an application processor and a modem processor may be integrated in the processor 810. The application processor primarily processes operations involving an operating system, user interfaces, application programs, and the like. The modem processor primarily processes radio communication signals, for example, being a baseband processor. It can be understood that the modem processor may alternatively be not integrated in the processor 810.

The radio frequency unit 801 is configured to send target sidelink control information SCI, where the target SCI is used to indicate sidelink SL positioning reference signal PRS resource information, and the target SCI is SCI dedicated to an SL PRS or SCI shared with data; or
the radio frequency unit 801 is configured to receive target sidelink control information SCI from a first terminal, where the target SCI is used to indicate sidelink SL positioning reference signal PRS resource information, and the target SCI is SCI dedicated to an SL PRS or SCI for data sharing; and
the processor is configured to perform a target operation based on the SL PRS resource information; where the target operation includes at least one of the following: performing an SL resource selection; sending the SL PRS according to an indication of the SCI; and receiving an SL PRS indicated by the SCI.

An embodiment of this application further provides a readable storage medium, where a program or an instruction is stored in the readable storage medium. When the program or the instruction is executed by a processor, the processes of the foregoing embodiment of the sidelink positioning processing method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing sidelink positioning processing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing sidelink positioning processing method embodiments, with the same technical effects achieved. To avoid repetition, details are not repeated herein.

An embodiment of this application further provides a communication system, including a first terminal and a second terminal. The first terminal is configured to perform the processes of the foregoing method embodiments shown in FIG. 2; and the second terminal is configured to perform the processes of the foregoing method embodiments shown in FIG. 4, with the same technical effects achieved. To avoid repetition, details are not described herein again.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A sidelink positioning processing method, comprising:
sending, by a first terminal, target sidelink control information SCI, wherein the target SCI is used to indicate sidelink SL positioning reference signal PRS resource information, and the target SCI is SCI dedicated to an SL PRS or SCI shared with data.

2. The method according to claim 1, wherein the target SCI is first-stage SCI in two-stage SCI.

3. The method according to claim 1, wherein the method further comprises:
obtaining, by the first terminal, SL PRS configuration information; and
determining, by the first terminal, the target SCI based on the SL PRS configuration information.

4. The method according to claim 3, wherein the SL PRS configuration information comprises at least one of the following:
a time domain position available for SL PRS;
a frequency domain position available for SL PRS;
an SL PRS bandwidth or SL PRS bandwidth candidate set;
a comb or a comb candidate set;
a number of symbols or a candidate set of number of symbols;
a number of cyclic shifts or a candidate set of cyclic shifts;
a period or a period candidate set;
an SL PRS time-frequency resource pattern or an SL PRS time-frequency resource pattern candidate set;
a sequence identifier or a sequence identifier candidate set;
an SL PRS priority or an SL PRS priority candidate set; and
configuration information for a physical sidelink control channel PSCCH associated with SL PRS.

5. The method according to claim 4, wherein the configuration information for the PSCCH comprises at least one of a PSCCH time domain position configuration and a PSCCH frequency domain position configuration, wherein the PSCCH time domain position configuration comprises at least one of the number of PSCCH occasions in each slot, a number of symbols in each PSCCH occasion, a position of a PSCCH occasion in each slot, and a PSCCH period, and the PSCCH frequency domain position configuration comprises at least one of a number of physical resource blocks PRBs occupied by one PSCCH and a PSCCH frequency domain candidate position.

6. The method according to claim 3, wherein the SL PRS configuration information further comprises a configuration parameter for an SL PRS resource block.

7. The method according to claim 6, wherein the SL PRS resource block meets at least one of the following: one SL PRS resource block occupies continuous PRBs in frequency domain, and one SL PRS resource block occupies at least one slot and continuous symbols in one slot in time domain;
first features of different SL PRS resources comprised in a same SL PRS resource block are the same, and the first feature comprises at least one of the following: an SL PRS bandwidth, a comb size, a number of symbols, and an available cyclic shift;
different SL PRS resources comprised in one SL PRS resource block are distinguished by at least one of different comb offsets, symbol positions, and sequences;
in one slot, different SL PRS resources comprised in the SL PRS resource block are distinguished by different second features, and the second feature comprises at least one of a comb offset, a symbol position, and a sequence;
in one slot, mapping of each SL PRS resource in the SL PRS resource block starts from the lowest PRB or the lowest subchannel of the SL resource block;
in one slot, each SL PRS resource in the SL PRS resource block occupies an entire bandwidth of the SL PRS resource block;
in one slot, one SL PRS resource in the SL PRS resource block has Z consecutive symbols, wherein Z is a positive integer;
in one slot, a symbol spaced between SL PRS resources in different time domain positions comprises at least one of a GAP symbol and an automatic gain control AGC symbol;
in one slot, each SL PRS resource in the SL PRS resource block is associated with an SL PRS resource number or an SL PRS resource identifier;
in one slot, the 1st symbol of the SL PRS resource block is used for AGC, and the last symbol is a GAP symbol;
in one slot, a PSCCH in the SL PRS resource block has at least one PSCCH transmission occasion in time domain;
in one slot, a PSCCH in the m-th PSCCH transmission occasion in the SL PRS resource block is used to indicate an SL PRS resource located after the m-th PSCCH occasion and before the (m+1)-th PSCCH transmission occasion, wherein m is a positive integer;
in one slot, one PSCCH in the SL PRS resource block occupies L consecutive symbols, wherein L is a positive integer;
in one slot, a symbol spaced between PSCCHs in different time domain positions comprise at least one of a GAP symbol and an AGC symbol;
in one slot, one PSCCH in the SL PRS resource block occupies M continuous PRBs or M continuous subchannels in a bandwidth of the SL PRS resource block, wherein M is a positive integer;
in one slot, one PSCCH in the SL PRS resource block is associated with one PSSCH;
in one slot, mapping of a PSCCH at the lowest frequency domain position in the SL PRS resource block starts from the lowest PRB or the lowest subchannel of the SL resource block;
in one slot, a PSCCH in the SL PRS resource block is associated with a PSCCH number or a PSCCH identifier;
different SL PRS resource blocks have different third features, wherein the third feature comprises at least one of the following: an SL PRS bandwidth, a comb size, a number of symbols, and an available cyclic shift;
in one slot, different SL PRS resources in the SL PRS resource block have a first mapping relationship with corresponding PSCCHs; and
at least one SL PRS resource block is configured or preconfigured in one resource pool.

8. The method according to claim 7, wherein the first mapping relationship comprises mapping SL PRS resources differentiated by different second features to PSCCHs at different time-frequency positions, and the second feature comprises at least one of a comb offset, a symbol position, and a sequence.

9. The method according to claim 6, wherein the configuration parameter for the SL PRS resource block comprises at least one of the following:
an SL PRS resource block identifier;
a time domain position of the SL PRS resource block;
a frequency domain position of the SL PRS resource block;
a number of symbols that one terminal is able to occupy in a slot;
a symbol position occupied by the SL PRS in a slot;
a comb structure size;
cyclic shift information; and
PSCCH configuration information.

10. The method according to claim 1, wherein the dedicated SCI comprises at least one of the following indication information: a number of a PSCCH in which SCI is located in a PSCCH resource group;
an SL resource block identifier;
a first SL PRS enabling identifier, wherein the first SL PRS enabling identifier is used to indicate whether an SL PRS is present in a first slot in which the dedicated SCI is located;
an SL PRS resource identifier, wherein the SL PRS resource identifier is used to indicate a number of a resource selected for the SL PRS by the first terminal from a resource pool or an SL PRS resource block;
SL PRS time-frequency position indication information in the first slot;
SL PRS comb structure indication information;
SL PRS comb offset indication information;
SL PRS cyclic shift indication information;
SL PRS sequence identifier indication information;
SL PRS time-frequency resource pattern indication information;
first indication information, wherein the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

11. The method according to claim 10, wherein the SL PRS time-frequency position indication information comprises:
frequency domain position indication information, wherein the frequency domain position indication information indicates at least one of a frequency domain starting position and a bandwidth; and
time domain position indication information, wherein the time domain position indication information indicates at least one of a starting symbol in a slot and a number of symbols in the slot.

12. The method according to claim 10, wherein the first indication information comprises at least one of the following:
first sub-indication information, wherein the first sub-indication information is used to indicate time-frequency position information; and
second sub-indication information, wherein the second sub-indication information is used to indicate a number of resources.

13. The method according to claim 1, wherein information indicated by the target SCI comprises second indication information of second-stage SCI in two-stage SCI, and the second-stage SCI is used to jointly indicate the SL PRS resource information along with the target SCI.

14. The method according to claim 13, wherein in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI;
a symbol occupied by the PSSCH carrying the second-stage SCI;
a demodulation reference signal DMRS pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, wherein the second SL PRS enabling identifier is used to indicate whether an SL PRS is present in a third slot in which the second-stage SCI is located; and
an SL PRS resource block identifier.

15. The method according to claim 13, wherein in a case that the target SCI is dedicated SCI, the second-stage SCI comprises at least one of the following:
a second SL PRS enabling identifier, wherein the second SL PRS enabling identifier is used to indicate whether an SL PRS is present in a slot in which the second-stage SCI is located;
an SL PRS resource identifier, wherein the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, wherein the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

16. The method according to claim 13, wherein in a case that the target SCI is dedicated SCI, a PSSCH carrying the second-stage SCI comprises at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
a number of ports of a DMRS corresponding to the PSSCH is 1;
a number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

17. The method according to claim 13, wherein in a case that the target SCI is shared SCI, the format of the second-stage SCI is a format for transmitting an SL PRS configuration parameter and performing data transmission.

18. The method according to claim 13, wherein in a case that the target SCI is shared SCI, the second-stage SCI comprises fourth indication information associated with the SL PRS, and the fourth indication information comprises at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, wherein the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; wherein
the fourth slot comprises at least one of a slot in which the shared SCI is located and a reserved slot.

19. The method according to claim 1, wherein after the sending, by a first terminal, target sidelink control information SCI, the method further comprises:
sending, by the first terminal, the SL PRS based on the SL PRS resource information.

20. The method according to claim 1, wherein in a case that the target SCI is dedicated SCI, a resource for transmitting the SL PRS and a resource for transmitting the data are located in different resource pools.

21. The method according to claim 1, wherein information indicated by the shared SCI comprises at least one of the following:
a frequency-domain resource allocation indication;
second-stage SCI format information, wherein the second-stage SCI format information comprises a configuration parameter for transmitting the SL PRS and a format for data transmission;
a time-domain resource allocation indication; and
fifth indication information in a reserved bit or a preset code point.

22. The method according to claim 21, wherein the frequency-domain resource allocation indication meets any one of the following:
the frequency-domain resource allocation indication is used for determining a PSSCH frequency domain position;
the frequency-domain resource allocation indication is used for determining an SL PRS frequency domain position; and
the frequency-domain resource allocation indication is used for determining a PSSCH frequency domain position and an SL PRS frequency domain position.

23. The method according to claim 21, wherein a reserved slot in the time-domain resource allocation indication is used to indicate any one of the following: a slot used only for data transmission, a slot shared by data and the SL PRS, and a slot used only for SL PRS transmission.

24. The method according to claim 21, wherein the fifth indication information comprises at least one of the following:
a third SL PRS enabling identifier, wherein the third SL PRS enabling identifier is used to indicate whether an SL PRS is present in a fourth slot; and
a symbol occupied by the SL PRS, wherein the symbol occupied by the SL PRS is used to indicate a symbol position of the fourth slot; wherein
the fourth slot comprises at least one of a slot in which the shared SCI is located and a reserved slot.

25. A sidelink positioning processing method, comprising:
receiving, by a second terminal, target sidelink control information SCI from a first terminal, wherein the target SCI is used to indicate sidelink SL positioning reference signal PRS resource information, and the target SCI is SCI dedicated to an SL PRS or SCI for data sharing; and
performing, by the second terminal, a target operation based on the SL PRS resource information; wherein
the target operation comprises at least one of the following:
performing an SL resource selection;
sending the SL PRS according to an indication of the SCI; and
receiving an SL PRS indicated by the SCI.

26. The method according to claim 25, wherein the target SCI is first-stage SCI in two-stage SCI.

27. The method according to claim 25, wherein the dedicated SCI comprises at least one of the following indication information:
a number of a PSCCH in which SCI is located in a PSCCH resource group;
an SL resource block identifier;
a first SL PRS enabling identifier, wherein the first SL PRS enabling identifier is used to indicate whether an SL PRS is present in a first slot in which the dedicated SCI is located;
an SL PRS resource identifier, wherein the SL PRS resource identifier is used to indicate a number of a resource selected for the SL PRS by the first terminal from a resource pool or an SL PRS resource block;
SL PRS time domain position indication information of the first slot;
SL PRS comb structure indication information;
SL PRS comb offset indication information;
SL PRS cyclic shift indication information;
SL PRS sequence identifier indication information;
SL PRS time-domain resource pattern indication information;
first indication information, wherein the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

28. The method according to claim 27, wherein the SL PRS time domain position indication information comprises:
frequency domain position indication information, wherein the frequency domain position indication information indicates at least one of a frequency domain starting position and a bandwidth; and
time domain position indication information, wherein the time domain position indication information indicates at least one of a starting symbol in a slot and a number of symbols in the slot.

29. The method according to claim 27, wherein the first indication information comprises at least one of the following:
first sub-indication information, wherein the first sub-indication information is used to indicate time-frequency position information; and
second sub-indication information, wherein the second sub-indication information is used to indicate a number of resources.

30. The method according to claim 26, wherein information indicated by the target SCI comprises second indication information of second-stage SCI in two-stage SCI, and the second-stage SCI is used to jointly indicate the SL PRS resource information along with the target SCI.

31. The method according to claim 30, wherein in a case that the target SCI is dedicated SCI, the second indication information is used to indicate at least one of the following:
a code rate of the second-stage SCI;
a format of the second-stage SCI;
a PRB or subchannel occupied by a physical sidelink shared channel PSSCH carrying the second-stage SCI;
a symbol occupied by the PSSCH carrying the second-stage SCI;
a demodulation reference signal DMRS pattern corresponding to the PSSCH carrying the second-stage SCI;
a DMRS port indication corresponding to the PSSCH carrying the second-stage SCI;
an SL PRS time domain position of a first slot in which the target SCI is located;
a second SL PRS enabling identifier, wherein the second SL PRS enabling identifier is used to indicate whether an SL PRS is present in a third slot in which the second-stage SCI is located; and
an SL PRS resource block identifier.

32. The method according to claim 30, wherein in a case that the target SCI is dedicated SCI, the second-stage SCI comprises at least one of the following:
a second SL PRS enabling identifier, wherein the second SL PRS enabling identifier is used to indicate whether an SL PRS is present in a slot in which the second-stage SCI is located;
an SL PRS resource identifier, wherein the SL PRS resource identifier is used to indicate a number of a resource selected for the SL PRS by the first terminal from a resource pool or an SL PRS resource block;
SL PRS time domain position indication information of a first slot in which the target SCI is located;
SL PRS comb structure indication information;
SL PRS comb offset indication information;
SL PRS cyclic shift indication information;
SL PRS sequence identifier indication information;
SL PRS time-domain resource pattern indication information;
first indication information, wherein the first indication information is used to indicate a repeated or reserved SL PRS resource in a second slot, and the second slot is different from the first slot;
SL PRS periodic indication information;
SL PRS priority indication information;
a destination address identifier associated with the SL PRS;
a resource identifier associated with the SL PRS; and
a positioning measurement reporting request.

33. The method according to claim 30, wherein in the case that the target SCI is dedicated SCI, a PSSCH carrying the second-stage SCI comprises at least one of the following:
the PSSCH and a PSCCH are frequency division multiplexed;
the PSSCH and the SL PRS are not frequency division multiplexed;
the PSSCH and a PRS occupy different symbols;
mapping of the PSSCH starts from the 1st symbol of a DMRS;
resource element RE-level frequency division multiplexing is used for the PSSCH and the DMRS;
a number of ports of a DMRS corresponding to the PSSCH is 1;
a number of symbols of the DMRS corresponding to the PSSCH is 1 or 2;
a plurality of DMRS symbols corresponding to the PSSCH are discontinuous;
the DMRS corresponding to the PSSCH is a comb structure, and REs are distributed at equal intervals; and
the DMRS corresponding to the PSSCH and the SL PRS in the 1st symbol has a same RE position in overlapping PRBs.

34. The method according to claim 30, wherein in a case that the target SCI is shared SCI, the format of the second-stage SCI is a format for transmitting an SL PRS configuration parameter and performing data transmission.

35. The method according to claim 30, wherein in a case that the target SCI is shared SCI, the second-stage SCI comprises fourth indication information associated with the SL PRS, and the fourth indication information comprises at least one of the following:
frequency domain position indication information of an SL PRS in a fourth slot;
comb structure indication information of the SL PRS in the fourth slot;
comb offset indication information of the SL PRS in the fourth slot;
cyclic shift indication information of the SL PRS in the fourth slot;
sequence identifier indication information of the SL PRS in the fourth slot;
time-domain resource pattern indication information of the SL PRS in the fourth slot;
priority indication information of the SL PRS in the fourth slot;
a third SL PRS enabling identifier, wherein the third SL PRS enabling identifier is used to indicate whether an SL PRS is present in a reserved slot;
indication information of an SL PRS resource in a slot reserved only for the SL PRS;
a destination address identifier associated with the SL PRS;
a resource identifier associated with the SL PRS; and
a positioning measurement reporting request; wherein
the fourth slot comprises at least one of a slot in which the shared SCI is located and a reserved slot.

36. A sidelink positioning processing apparatus, comprising:
a sending module, configured to send target sidelink control information SCI, wherein the target SCI is used to indicate sidelink SL positioning reference signal PRS resource information, and the target SCI is SCI dedicated to an SL PRS or SCI shared with data.

37. A sidelink positioning processing apparatus, comprising:
a receiving module, configured to receive target sidelink control information SCI from a first terminal, wherein the target SCI is used to indicate sidelink SL positioning reference signal PRS resource information, and the target SCI is SCI dedicated to an SL PRS or SCI for data sharing; and
an execution module, configured to perform a target operation based on the SL PRS resource information; wherein
the target operation comprises at least one of the following:
performing an SL resource selection;
sending the SL PRS according to an indication of the SCI; and
receiving an SL PRS indicated by the SCI.

38. A terminal, comprising a processor and a memory, wherein the memory stores a program or instructions capable of running on the processor; and when the program or the instructions are executed by the processor, the steps of the sidelink positioning processing method according to any one of claims 1 to 35 are implemented.

39. A readable storage medium, wherein the readable storage medium stores a program or instructions, and when the program or the instructions are executed by a processor, the steps of the sidelink positioning processing method according to any one of claims 1 to 35 are implemented.
